# EUROPÄISCHE PATENTSCHRIFT

(11) **EP 1 836 421 B1**
(45) Veröffentlichungstag und Bekanntmachung des Hinweises auf die Patenterteilung: **23.12.2009**
(21) Anmeldenummer: 06700083.6
(22) Anmeldetag: 03.01.2006
(51) Int. Cl.: F16H 63/34, F16H 61/30

(54) **VORRICHTUNG ZUR BETÄTIGUNG VON SCHALTGABELN**
DEVICE FOR OPERATING SELECTOR FORKS
DISPOSITIF D'ACTIONNEMENT DE FOURCHETTES

(30) Priorität: 04.01.2005 DE 102005000700
(43) Veröffentlichungstag der Anmeldung: 26.09.2007
(73) Patentinhaber: KNORR-BREMSE Systeme für Nutzfahrzeuge GmbH, 80809 München (DE)
(72) Erfinder: FEHÈR, Zoltán, 71701 Schwieberdingen (DE)
(74) Vertreter: Mattusch, Gundula
(86) Internationale Anmeldenummer: PCT/EP2006/000014
(87) Internationale Veröffentlichungsnummer: WO 2006/072567

(56) Entgegenhaltungen:
- GB-A- 948 509
- US-A- 2 157 592
- US-A- 4 277 983
- US-A- 4 583 418

## Beschreibung

Die vorliegende Erfindung betrifft eine Schaltgabelbetäti-Die vorliegende Erfindung betrifft eine Schaltgabelbetätigungsvorrichtung zur wahlweisen Betätigung von zumindest zwei Schaltgabeln eines Getriebes, mit Blockiermitteln zum Blockieren einer nicht zu betätigenden Schaltgabel und mit Mitnehmermitteln zum Mitnehmen einer zu betätigenden Schaltgabel in einer axialen Richtung.

Derartige Vorrichtungen sind üblicherweise Bestandteil eines Drehzahl-Drehmomentwandlers, insbesondere eines zweistufigen Zahnrad-Wechselgetriebes für Kraftfahrzeuge. Ein Gang- beziehungsweise Übersetzungswechsel eines derartigen als Hauptgetriebe eingesetzten Wechselgetriebes wird durch zwei mechanische Eingangssignale angesteuert. Ein Eingangssignal wird durch die Wählrichtung des Ganghebels erzeugt. Hierbei ist zu entscheiden, welche der zur Auswahl stehenden Schaltgabeln betätigt werden soll. Das zweite Eingangssignal wird durch die Schaltrichtung des Ganghebels erzeugt. Beispielsweise kann die Schaltgabel entlang der Schaltrichtung zwischen zwei Schaltstellungen und einer Neutralstellung bewegt werden. Üblicherweise werden die Schalt- und die Wählrichtung als mechanische Signale über einen Seilzug oder ein Gestänge zum Getriebe übertragen. Diese beiden mechanischen Eingangssignale werden am Eingang des Getriebes für die Auswahl der zu betätigenden Schaltgabel und für die Bewegung der ausgewählten Schaltgabel durch die Mitnehmermittel zwischen den entsprechenden Positionen verwendet. Diese beiden mechanischen Eingangssignale werden beispielsweise bei einem Drei-Gang-Hauptgetriebe mit Rückwärtsgang auf zwei Schaltgabeln übertragen, die jeweils zwei Schaltstellungen und eine Neutralstellung einnehmen können. Bei der Auswahl und dem nachfolgenden Betätigen der Schaltgabel muss sichergestellt werden, dass sich die Schaltgabeln nur nach einem vorgegebenen Schaltschema bewegen und sich keine unerlaubten Zustände einstellen lassen. Beispielsweise dürfen sich zwei Schaltgabeln nicht gleichzeitig in Eingriff befinden.

Gemäß dem Stand der Technik wird die Wählbewegung des Schalthebels am Getriebe beispielsweise in eine lineare Bewegung eines Schaltfingers zur Auswahl eines Schaltlineals umgesetzt. Dabei gleitet der Schaltfinger an einem Gestänge in einer Bewegung quer zur Längsachse des Schaltlineals in einer Schaltgasse, die durch Aussparungen in den parallel ausgerichteten Schaltlinealen gebildet wird. Die Schaltbewegung, also die Betätigung eines eine Schaltgabel tragenden Schaltlineals kann beispielsweise in eine Drehbewegung des Schaltfingers umgesetzt werden, der dann über das ausgewählte Schaltlineal die Schaltgabel entlang der Längsachse des Schaltlineals bewegt und damit Teile des Getriebes in den Kraftfluss ein- oder ausrückt.

Bei teil- oder vollautomatisierten Schaltgetrieben können die mechanischen Eingangssignale (die Schalt- und die Wählrichtung) auch mittels elektromotorischer, pneumatischer oder hydraulischer Betätigungsmittel unterstützt oder umgesetzt und so das Getriebe gesteuert werden.

Während des Betriebs des Getriebes muss stets sichergestellt werden, dass sich die Schaltgabeln beziehungsweise die damit verbundenen Schaltlineale bei Wähl- und Schaltvorgängen nur nach dem vorgegebenen Schaltschema (z. B. H-Schaltung) bewegen und sich keine unerlaubten Zustände, beispielsweise auch durch Erschütterungen, einstellen. Insbesondere muss vermieden werden, dass zwei Schaltgabeln gleichzeitig Getriebeteile in Eingriff gebracht werden können.

Getriebe gemäß dem Stand der Technik weisen den Nachteil auf, dass die Schaltlineale sowie die daran befestigten Schaltgabeln und die die Schaltlineale betätigende Steuereinheit aufwendig zu montieren sind. Des Weiteren weisenderartige Steuereinheiten oft einen sehr komplizierten Aufbau aufweisen.

US 4,583,418 zeigt eine gattungsgemässe Schaltgabelbetätigungsvorrichtung mit einer Lagerachse, die ein Mitnehmerteil und ein Blockierteil lagert.

Der Erfindung liegt demzufolge die Aufgabe zugrunde, eine Schaltgabelbetätigungsvorrichtung für ein Getriebe so wei terzuentwickeln, dass die oben genannten Nachteile vermieden werden. Insbesondere soll eine derartige Schaltgabelbetätigungsvorrichtung einen einfachen Aufbau mit sehr wenigen Komponenten aufweisen.

Diese Aufgabe wird mit den Merkmalen der Ansprüche 1 und 13 gelöst, die eine Schaltgabelbetätigungsvorrichtung und ein Getriebe betreffen.

Vorteilhafte Weiterbildungen und Ausgestaltungen ergeben sich aus den Unteransprüchen.

Die erfindungsgemäße Schaltgabelbetätigungsvorrichtung baut auf dem gattungsgemäßen Stand der Technik dadurch auf, dass sie eine in der axialen Richtung angeordnete Lagerachse aufweist, die zumindest ein Blockierteil der Blockiermittel und zumindest ein Mitnehmerteil der Mitnehmermittel lagert. Durch die Lagerung eines Blockierteils und eines Mitnehmerteils auf einer sich in der axialen Richtung erstreckenden Lagerachse wird erreicht, dass einerseits die Montage der Schaltgabelbetätigungsvorrichtung hinsichtlich ihrer Wähl-, Schalt- und Blockierfunktionen im Wesentlichen unabhängig von den restlichen Bauteilen des Getriebes durchgeführt werden kann. Zum anderen kann in einem weiteren Schritt die Funktionalität der Schaltgabelbetätigungsvorrichtung ebenfalls unabhängig von der des Getriebes geprüft werden. Zusammen ergibt dies einen wesentlichen Fortschritt hinsichtlich einer sicherheits- und produktivitätsoptimierten Produktion von Schaltgetrieben. Darüber hinaus lässt sich durch die Anordnung des Blockierteils und des Mitnehmerteils auf der axial angeordneten Lagerachse eine erhebliche Reduzierung an Komponenten bei einer gleichbleibenden Funktionalität und damit auch eine reduzierte Ausfallwahrscheinlichkeit realisieren. Insbesondere lässt sich eine kurze Entfernung zwischen den Blockier- und Mitnehmermitteln wie beispielsweise Schaltstangen und damit zusammenwirkenden Teilen des Getriebes wie beispielsweise Zahnrädern verwirklichen. Dies ermöglich eine kurze Bauform der entsprechenden Schaltgabeln. Schließlich ermöglicht es diese Anordnung, die Betätigung der das Blockierteil und das Mitnehmerteil lagernden Lagerachse in vorteilhafter Weise durch eine Kraftverstärkungseinheit zu erleichtern oder durch geeignete Stellglieder ganz oder teilweise zu automatisieren.

Erfindungsgemäß ist vorgesehen, dass die Lagerachse durch eine Kolbenstange gebildet ist, insbesondere durch eine Kolbenstange eines Servozylinders. Auf diese Weise kann die Kraftübertragungseinheit, insbesondere der Servozylinder, die als Kolbenstange ausgebildete Lagerachse direkt betätigen und damit ein Ausrücken beziehungsweise ein Einrücken von Getriebeteilen in den Kraftfluss unterstützen und insbesondere auch automatisch vornehmen. Die Montage und die Prüfung kann auch hier unabhängig vom eigentlichen Getriebe vorgenommen werden.

Insbesondere kann vorteilhafterweise vorgesehen sein, dass das Mitnehmerteil in der axialen Richtung verschiebbar angeordnet ist. Das Mitnehmerteil kann dadurch die zu betätigende Schaltgabel in axialer Richtung entlang der Lagerachse mitnehmen und so Teile des Getriebes schalten.

In einer weiteren vorteilhaften Ausführungsform kann vorgesehen sein, dass die Lagerachse das Mitnehmerteil derart lagert, dass es eine Drehbewegung um die axiale Richtung ausführen kann. Auf diese Weise kann beispielsweise durch die Drehbewegung des Mitnehmerteils das Auswählen einer zu betätigenden Schaltgabel ermöglicht werden.

Eine bevorzugte Weiterbildung der Erfindung sieht vor, dass das Mitnehmerteil einen Außenumfangsabschnitt mit einer ersten Steuerkontur aufweist, die dazu vorgesehen ist, mit Umfangskonturen von zumindest zwei die zumindest zwei Schaltgabeln tragenden Schaltgabelstangen zusammenzuwirken. Durch eine entsprechende Ausgestaltung der ersten Steuerkontur und der Umfangskonturen der Schaltgabelstangen, mit denen die erste Steuerkontur des Mitnehmerteils zusammenwirkt, kann so eine Mitnahme einer zu betätigenden Schaltgabel in einer axialen Richtung erreicht werden. Durch entsprechende Positionswechsel des Mitnehmerteils können die zu betätigenden Schaltgabeln ausgewählt und mitgenommen werden, während andere nicht zu betätigende Schaltgabeln freigegeben werden können.

Weiterhin kann vorteilhafterweise vorgesehen sein, dass die erste Steuerkontur die zu betätigende Schaltgabel in der axialen Richtung mitnimmt und gleichzeitig nicht auf die nicht zu betätigende Schaltgabel einwirkt. Durch eine entsprechende Gestaltung der ersten Steuerkontur und der Umfangskonturen der zu betätigenden Schaltgabelstangen tritt bei einem Positionswechsel des Mitnehmerteils die erste Steuerkontur in Wechselwirkung mit der Umfangskontur der zu betätigenden Schaltgabel und wechselwirkt gleichzeitig nicht mit der Umfangskontur der zweiten nicht zu betätigenden Schaltgabel. Auf diese Weise wird die zu betätigende Schaltgabel ausgewählt und kann in axialer Richtung verschoben werden.

Weiterhin kann in einer bevorzugten Ausführungsform vorgesehen sein, dass das Blockierteil hinsichtlich der axialen Richtung arretiert ist. Dies bewirkt bei einer Wechselwirkung des Blockiermittels mit einer nicht zu betätigenden Schaltgabel eine Blockierung der nicht zu betätigenden Schaltgabel in axialer Richtung und verhindert damit in einfacher Weise ein unerwünschtes Ein- oder Ausrücken von Getriebeteilen.

Weiterhin kann vorgesehen sein, dass die Lagerachse das Blockierteil derart lagert, dass es eine Drehbewegung um die axiale Richtung ausführen kann. Durch eine derartige Drehbewegung kann das Blockierteil mit der zu betätigenden Schaltgabel in Wechselwirkung treten und so eine Verschiebung der zu betätigenden Schaltgabel in axialer Richtung blockieren.

Insbesondere kann eine vorteilhafte Ausführungsform vorsehen, dass das Blockierteil einen Außenumfangsabschnitt mit einer zweiten Steuerkontur aufweist, die dazu vorgesehen ist, mit Umfangskonturen von zumindest zwei die zumindest zwei Schaltgabeln tragenden Schaltgabelstangen zusammenzuwirken. Auf diese Weise kann das Blockierteil über die zweite Steuerkontur mit der Umfangskontur einer Schaltgabelstange in Wechselwirkung treten, die eine Schaltgabel trägt, die nicht betätigt werden soll. Durch eine geeignete Drehung des Blockierteils kann so die Bewegungsfreiheit der nicht zu betätigenden Schaltgabel gesteuert werden.

Bei bevorzugten Ausführungsformen der erfindungsgemäßen Vorrichtung ist weiterhin vorgesehen, dass die zweite Steuerkontur eine Bewegung der nicht zu betätigenden Schaltgabel in der axialen Richtung blockiert und gleichzeitig eine Bewegung der zu betätigenden Schaltgabel in der axialen Richtung freigibt. Durch diese blockierende Zusammenwirkung der zweiten Steuerkontur mit einer nicht zu betätigenden Schaltgabel und dem gleichzeitigen Freigeben einer zu betätigenden Schaltgabel werden die axialen Bewegungen der Schaltgabel über eine einzige Steuerbewegung gesteuert. Dies erlaubt eine erhebliche Reduzierung in der Anzahl aufzuwendender Komponenten und damit auch eine deutliche Kostenersparnis

Eine weitere vorteilhafte Ausführungsform ergibt sich dadurch, dass eine Drehbewegung des Blockierteils um die axiale Richtung mit einer Drehbewegung des Mitnehmerteils um die axiale Richtung gekoppelt ist. Die Koppelung, insbesondere die Synchronisation der Drehbewegungen des Blockierteils und des Mitnehmerteils um die axiale Richtung bewirkt so bei einer geeigneten Drehbewegung ein Freigeben der zu betätigenden Schaltgabel, ein Blockieren der nicht zu betätigenden Schaltgabel und gleichzeitig ein in Wechselwirkung Treten des Mitnehmerteils mit der zu betätigenden Schaltgabel, so dass bei einer nachfolgenden in axialer Richtung erfolgenden Bewegung des Mitnehmerteils die zu betätigende Schaltgabel in der axialen Richtung mitgenommen wird, während gleichzeitig durch das Blockierteil der Blockiermittel die nicht zu betätigende Schaltgabel in axialer Richtung blockiert ist. Diese Koppelung der Bewegungen reduziert den Aufwand zur Steuerung des Getriebes.

Weiterhin kann in einer vorteilhaften Ausführungsform vorgesehen sein, dass das Mitnehmerteil und das Blockierteil koaxial angeordnet sind. Eine koaxiale Anordnung des Mitnehmerteils und des Blockierteils auf der sich in axialer Richtung erstreckenden Lagerachse erlaubt beispielsweise eine synchrone Bewegung des Mitnehmerteils und des Blockierteils und ermöglicht außerdem eine Relativbewegung von Mitnehmerteil und Blockierteil in axialer Richtung. Dies ermöglicht eine einfache und kostengünstige gleichzeitige Steuerung von Mitnehmerteil und Blockierteil.

Ebenfalls kann in einer Ausführungsform vorteilhaft vorgesehen sein, dass das Mitnehmerteil mindestens eine Nut aufweist. Eine oder mehrere derartiger Nuten können mit entsprechenden Stiften oder Stegen beispielsweise in einem Abschnitt eines Gehäuses zusammenwirken. Dies ermöglicht eine Steuerung der Mitnehmermittelbewegungen. Beispielsweise wird so ein Betätigen einer Schaltgabel nur innerhalb eines vorgegebenen Schaltschemas sichergestellt.

Die Erfindung betrifft weiterhin ein Getriebe, insbesondere für Kraftfahrzeuge, mit einer erfindungsgemäßen Schaltgabelbetätigungsvorrichtung.

Bei einem derartigen Getriebe kann insbesondere vorgesehen sein, dass es sich um ein manuelles oder teilautomatisches Schaltgetriebe handelt. Beispielsweise kann die erfindungsgemäße Schaltgabelbetätigungsvorrichtung für ein manuelles Schaltgetriebe mit Seilzugbetätigung ausgelegt sein.

Der Erfindung liegt die Erkenntnis zugrunde, dass durch die gemeinsame Anbringung des Blockier- und Mitnehmerteils auf einer axial angeordneten Lagerachse eine modulare Getriebesteuereinheit zur Verfügung gestellt wird, die zusammen mit den Schaltgabeln vormontiert und geprüft werden kann. Die fertige Einheit kann dann in das Getriebegehäuse eingebaut werden. Des Weiteren lässt sich auf diese Weise ein einfacher Aufbau mit sehr wenigen Komponenten realisieren, der einen geringen Bauraum aufweist und bei dem nicht benutzte Schaltgabeln mechanisch blockiert werden. Darüber hinaus ist der gesamte Schalt- und Wählmechanismus auf einer Kraftverstärkungseinheit, wie zum Beispiel einem Servozylinder, montierbar.

Die Erfindung wird nun mit Bezug auf die begleitenden Zeichnungen anhand bevorzugter Ausführungsformen beispielhaft erläutert.

Dabei zeigen:
- Figur 1a: eine perspektivische Ansicht einer bevorzugten Ausführungsform einer erfindungsgemäßen Schaltgabelbetätigungsvorrichtung;
- Figur 1b: eine perspektivische Ansicht eines Details der erfindungsgemäßen Schaltgabelbetätigungsvorrichtung;
- Figur 2: eine Draufsicht der bevorzugten Ausführungsform der erfindungsgemäßen Schaltgabelbetätigungsvorrichtung;
- Figur 3: eine Vorderansicht der bevorzugten Ausführungsform der erfindungsgemäßen Schaltgabelbetätigungsvorrichtung;
- Figur 4: eine Schnittansicht entlang der Linie B-B der Figur 2 ;
- Figur 5: eine Schnittansicht entlang der Linie C-C der Figur 2; und
- Figur 6: eine Schnittansicht entlang der Linie A-A der Figur 3.

Bei der nachfolgenden Beschreibung der Zeichnungen bezeichnen gleiche Bezugszeichen gleiche oder vergleichbare Komponenten.

Die für das Verständnis der Erfindung weniger wichtigen Komponenten eines Getriebes, das durch eine erfindungsgemäße steuerbare Betätigungsvorrichtung gesteuert wird, wurden aus Gründen der Übersichtlichkeit weggelassen.

Die hier dargestellte Schaltgabelbetätigungsvorrichtung ist für ein Drei-Gang-Hauptgetriebe mit Rückwärtsgang vorgesehen. Selbstverständlich können mit der erfindungsgemäßen Vorrichtung auch Getriebe mit einer höheren oder einer niedrigeren Gangzahl beziehungsweise auch Getriebegruppen und Kombinationen von Getrieben gesteuert werden.

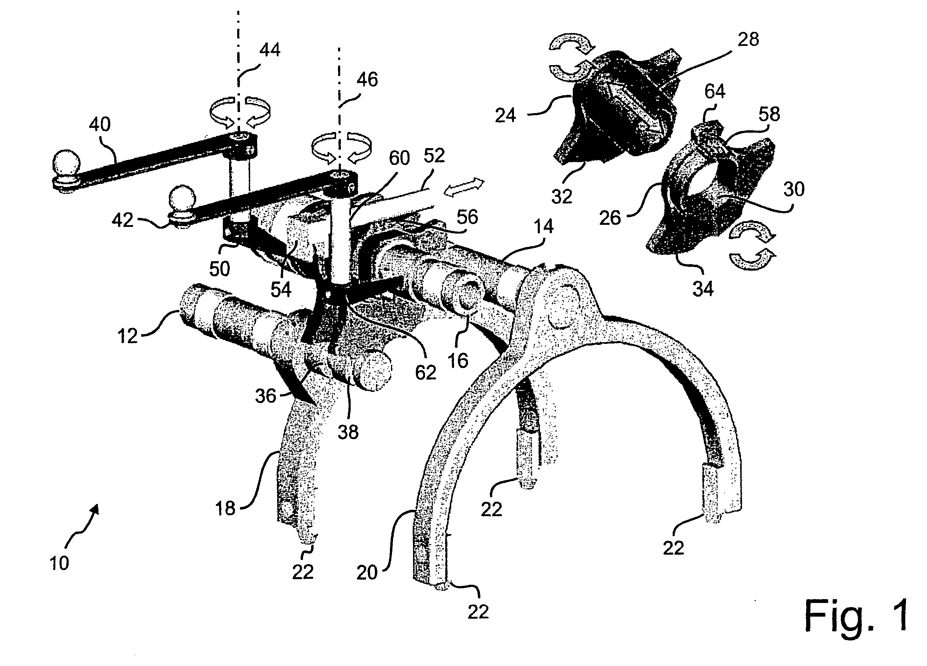

Die Figuren 1a und 1b zeigen eine perspektivische Ansicht der bevorzugten Ausführungsform einer erfindungsgemäßen Schaltgabelbetätigungsvorrichtung sowie Details der bevorzugten Ausführungsform der erfindungsgemäßen Schaltgabelbetätigungsvorrichtung. Die erfindungsgemäße Schaltgabelbetätigungsvorrichtung 10 weist drei parallel angeordnete Achsen auf. Zwei Achsen werden durch eine erste Schaltgabelstange 12 und eine zweite Schaltgabelstange 14 gebildet. Eine Lagerstange bildet die dritte Achse in Form einer Lagerachse 16. Die Schaltgabelstangen 12, 14 sind in nicht dargestellten Teilen eines Getriebegehäuses um ihre Achse drehbar und entlang ihrer Längsachse verschiebbar gelagert, die Lagerachse 16 ist entlang ihrer Längsachse verschiebbar. Die erste Schaltgabelstange 12 trägt eine erste Schaltgabel 18, die sich von der Längsachse der Lagerachse 16 weg erstreckt. Parallel zu der von der ersten Schaltgabel 18 gebildeten Ebene und ebenfalls von der Längsachse der Lagerachse 16 wegweisend erstreckt sich eine zweite Schaltgabel 20, die an einem freien Ende der zweiten Schaltgabelstange 14 angebracht ist. Die Schaltgabeln 18, 20 besitzen im Wesentlichen jeweils die Form eines Halbkreises und weisen an den Innenseiten ihrer Enden je ein Führungselement 22 auf. Diese greifen in nicht abgebildete Doppelschaltmuffen des Getriebes. Auf der Lagerachse 16 befinden sich das Mitnehmerteil 24 und das Blockierteil 26. Das Mitnehmerteil 24 sitzt konzentrisch auf der Lagerachse 16 und weist einen Führungsabschnitt 28 auf, dessen Oberfläche einen parallel zur Lagerachse ausgerichteten Polygonzylinder darstellt. Diese polygonförmige äußere Oberfläche des Führungsabschnitts 28 berührt die ebenfalls gleich ausgerichtete polygonzylinderförmige innere Oberfläche 30 des Blockierteils 26, das ebenfalls konzentrisch auf der Lagerachse 16 angeordnet ist. Das Mitnehmerteil 24 und das Blockierteil 26 können sich so axial relativ zueinander bewegen, sich aber nicht gegeneinander verdrehen. Das Blockierteil 26 kann also nur zusammen mit dem Mitnehmerteil eine Drehbewegung um die Lagerachse 16 ausführen. Anstatt der Polygonverbindung zwischen dem Mitnehmerteil 24 und dem Blockierteil 26 kann auch eine gleitende Feder gewählt werden. Das Mitnehmerteil 24 weist weiterhin eine erste Steuerkontur in Form einer Mitnehmersteuerkontur 32 auf und das Blockierteil 26 weist eine zweite Steuerkontur in Form einer Blockiersteuerkontur 34 auf. Die Mitnehmersteuerkontur 32 und die Blockiersteuerkontur 34 wirken mit entsprechenden Umfangsnuten der Steuergabelstangen 12, 14 zusammen. In dieser Abbildung zu sehen sind die Mitnehmerumfangsnut 36 und die Blockierumfangsnut 38 der ersten Steuergabelstange 12. Diese Nuten 36, 38 sind als Umfangsnuten in der ersten Steuergabelstange 12 vorgesehen. Des Weiteren sind in dieser Abbildung am Getriebeeingang zwei Drehhebel 40, 42 dargestellt, die um die Achse 44 beziehungsweise 46 gedreht werden können. Die Achsen 44, 46 sind senkrecht zu den durch die Schaltgabelstangen 12, 14 gebildeten Achsen und zur Längsachse der Lagerachse 16 angeordnet. Der Wählhebel 40 ist mit einer Wählhebelstange 48 drehfest verbunden, die ihrerseits drehbar um die Achse 44 gelagert ist. Die Wählhebelstange 48 wiederum weist einen drehfest mit ihr verbundenen Betätigungshebel 50 auf, der senkrecht zur Achse 44 und senkecht zum Wählhebel 40 angeordnet ist. Dieser Betätigungshebel betätigt eine Wählstange 52, die sich senkrecht zu den Achsen der Schaltgabelstangen 12, 14 und zur Längsachse der Lagerachse 16 sowie senkrecht zur Achse 44 beziehungsweise 46 erstreckt und in der aus den Schaltgabeln 18, 20 gebildeten Ebene liegt. Der Betätigungshebel 50 ist am Betätigungskopf 54 der Wählstange 52 angelenkt. Die Wählstange 52 ist entlang ihrer Achse verschiebbar gelagert. Sie weist an ihrer der Lagerachse 16 zugewandten Oberfläche eine Verzahnung 56 auf, die mit einem Verzahnungsabschnitt 58 des Blockierteils 26 in Eingriff steht. Der Verzahnungsabschnitt 58 ist an der oberen, den Schaltgabeln abgewandten Seite des Blockierteils 26 angeordnet. Alternativ kann anstelle der Verzahnung auch eine Kulissenführung oder ein Zwischenhebel mit Kugellager eingesetzt werden. Der Schalthebel 42 weist eine um die Achse 46 drehbare Schalthebelstange 60 auf und ist mit dieser drehfest an einem Ende der Schalthebelstange 60 verbunden. Das andere Ende der Schalthebelstange 60 ist mit einem Betätigungshebel 62 drehfest verbunden. Dieser erstreckt sich senkrecht zur Achse 46 und parallel zum Schalthebel 42 und kontaktiert den Führungsabschnitt 28 des Mitnehmerteils 24.

Im Betrieb gestaltet sich das Zusammenwirken der einzelnen Bauteile wie folgt: Die Drehbewegung der Hebel 40, 42 muss in eine lineare Bewegung einer der Schaltgabeln 18, 20 transformiert werden. Der Wählhebel 40 und der Schalthebel 42 übersetzen die mechanischen Eingangsignale, also die Wählrichtung und die Schaltrichtung zunächst in eine Drehbewegung. Die mechanischen Eingangssignale werden üblicherweise über ein Gestänge oder über einen Seilzug (beides hier nicht dargestellt) zum Getriebe übertragen. Wird an den Wählhebel 40 über eine derartige Anordnung ein Wählsignal übertragen, verdreht er dadurch die Wählhebelstange 48 um die Achse 44 um einen bestimmten Winkelbetrag. Diese Rotation wird bei dem Betätigungshebel 50 auf den Betätigungskopf 54 der Wählstange 52 übertragen. Diese wird also durch die Verdrehung des Wählhebels 40 in eine lineare Bewegung entlang ihrer eigenen Achse versetzt und betätigt wiederum über die Verzahnung 56 den Verzahnungsabschnitt 58 des Blockierteils 26. Dieses wiederum wird dadurch in eine Rotation um die Längsachse der Lagerstange 16 versetzt. Diese Rotation ändert die Winkelposition des Blockierteils 46 auf der Lagerstange 16. Dadurch gelangt beispielsweise die Blockiersteuerkontur 34 in Eingriff mit der Blockierumfangsnut 38 der ersten Schaltgabelstange 12, oder sie gibt beispielsweise die Umfangsnut 38 der ersten Schaltgabelstange 12 frei. Das Mitnehmerteil 24 und das Blockierteil 26 sind über die Polygonzylinderoberflächenabschnitte 28 und 30 drehfest bezüglich der Längsachse der Lagerachse 16 verbunden. Folglich vollführt das Mitnehmerteil 24 bei einer Drehung des Blockierteils 26 um die Längsachse der Lagerachse 16 eine Drehung in der gleichen Richtung und um den gleichen Winkelbetrag. Dies bewirkt komplementär zu den Auswirkungen einer Bewegung der Blockiersteuerkontur 34, dass die Mitnehmersteuerkontur 32 beispielsweise die Mitnehmerumfangsnut 36 der ersten Schaltgabelstange 12 freigibt oder mit der Mitnehmerumfangskontur 36 der Schaltgabelstange 12 in Eingriff gelangt. In analog komplementärer Weise verhalten sich die Steuerkonturen 32, 34 des Blockierteils 26 und des Mitnehmerteils 24 hinsichtlich der Umfangsnuten, die sich auf der Schaltgabelstange 14 befinden und in dieser Figur nicht einsehbar sind. Steuert ein mechanisches Eingangssignal den Schalthebel 42 an, so versetzt dieser die Schalthebelstange 60 in eine Rotation um die Achse 46. Daraufhin wird der Betätigungshebel 62 ebenfalls in Rotation um die Achse 46 versetzt und vermittelt diese Rotationsbewegung als lineare Bewegung an das Mitnehmerteil 24 entlang der durch die Lagerachse 16 definierten Achse.

Das Blockierteil 26 weist weiterhin eine Führungsnase 64 auf, die in einer in dieser Figur nicht abgebildeten Nut des Getriebegehäuses geführt wird. Diese Nut erstreckt sich parallel zu der von den Schaltgabeln gebildeten Ebene und senkrecht zu der von der Lagerachse 16 definierten Achse. Dabei bewegt sich das Mitnehmerteil 24 relativ zum Blockierteil 26, dem eine axiale Bewegung entlang der Längsachse der Lagerachse 16 durch die in einer hier nicht dargestellten Gehäusenut geführten Führungsnase 64 verwehrt ist. Gleichzeitig nimmt das Mitnehmerteil 24 diejenige Schaltgabelstange 12, 14 bei dieser Bewegung mit, mit deren Umfangsnut es sich mit seiner Mitnehmersteuerkontur 32 in Eingriff befindet. Dabei vollführt die ausgewählte Schaltgabelstange (12 oder 14) eine Verschiebung entlang ihrer Längsachse und nimmt dabei wiederum die entsprechende Schaltgabel (18 oder 20) bei ihrer Bewegung mit. Dabei wird, durch die Führungselemente 22 vermittelt, die entsprechende Schaltmuffe des Getriebes eingestellt, d. h. eingerückt oder ausgerückt. Während die Wählbewegung unverstärkt zur Auswahl der richtigen Schaltgabel genutzt werden kann, ist für die Schaltbewegung eine Kraftverstärkung, beispielsweise durch einen Servozylinder, vorteilhaft. In diesem Fall kann dessen Kolbenstange die Lagerachse 16 bilden.

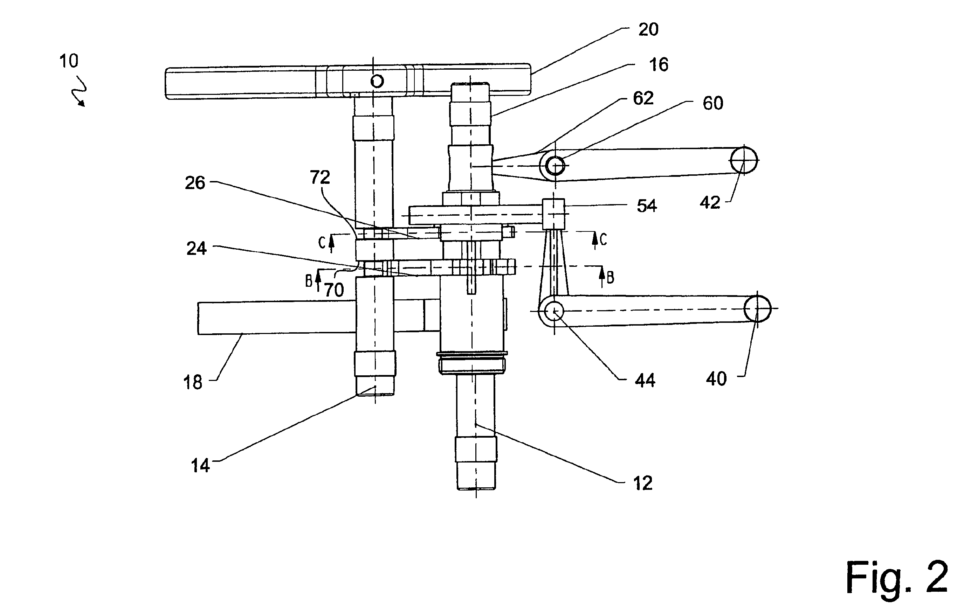

Figur 2 zeigt eine Draufsicht der bevorzugten Ausführungsform der erfindungsgemäßen Schaltgabelbetätigungsvorrichtung. Zusätzlich zu den in Bezug auf die Figur 1 beschriebenen Elementen zeigt die Schaltgabelbetätigungsvorrichtung 10 gemäß Figur 2 weiterhin Folgendes: Die zweite Schaltgabelstange 14 besitzt ebenfalls eine Mitnehmerumfangsnut 70 und eine Blockierumfangsnut 72. Die Lagerachse 16 bildet eine Kolbenstange eines Servozylinders.

Bei einer Rotationsbewegung um eine durch die Lagerachse 16 definierten Achse gibt die Blockiersteuerkontur 34 des Blockierteils 26 beispielsweise die Schaltstange 14 an der Umfangsnut 72 frei. Gleichzeitig greift das Mitnehmerteil 24 mit seiner Mitnehmersteuerkontur in die Mitnehmerumfangsnut 70 der zweiten Schaltgabelstange 14. Wird nun an dem Schalthebel 42 eine Schaltbewegung eingeleitet, wird, über den Betätigungshebel 60 vermittelt, das Mitnehmerteil 24 entlang der durch die Lagerachse 16 definierten Achse bewegt. Dabei nimmt das Mitnehmerteil 24 die durch das Blockierteil 26 freigegebene und in Mitnahmeeingriff mit dem Mitnehmerteil 24 befindliche Schaltgabelstange 14 mit. Bei dieser Bewegung kann die Bewegung des Mitnehmerteils 24 durch einen Servozylinder unterstützt werden.

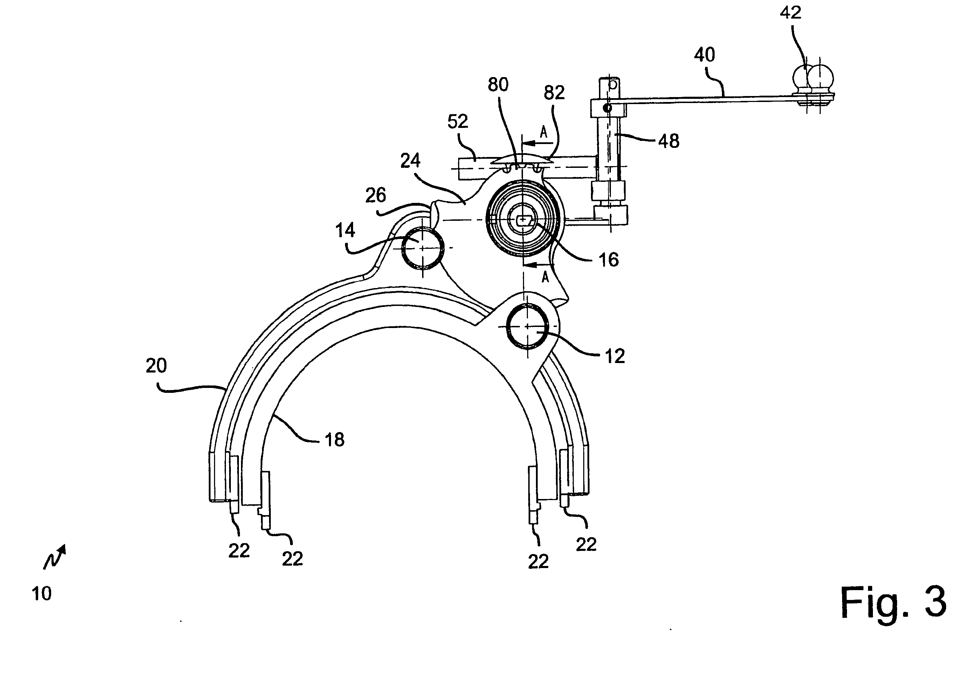

Figur 3 zeigt eine Vorderansicht der erfindungsgemäßen Schaltgabelbetätigungsvorrichtung. Hierbei ist das teilweise verdeckte Mitnehmerteil 24 vor dem Blockierteil 26 zu erkennen. Das Mitnehmerteil 24 weist an seiner den Schaltgabeln 18, 20 abgewandten Seite einen Einkerbungsabschnitt 80 auf. Des Weiteren ist in dieser Seitenansicht ein Teil des Getriebegehäuses abgebildet, der eine Führungsnut 82 für die Führungsnase 64 des Blockierteils 26 aufweist. Diese Führungsnut 82 kann in dem Gehäuse vorgesehen (beispielsweise gefräst) oder als zusätzliches Bauteil am Gehäuse fixiert sein.

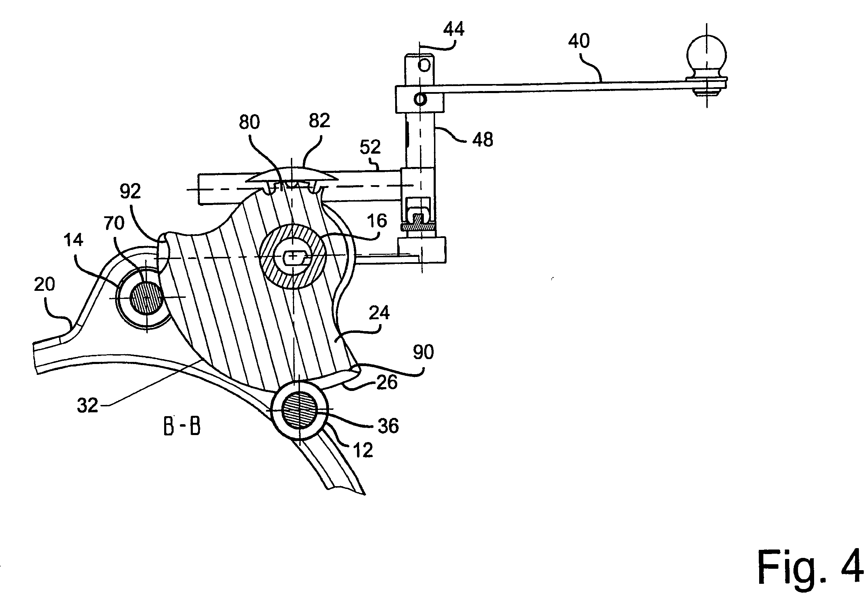

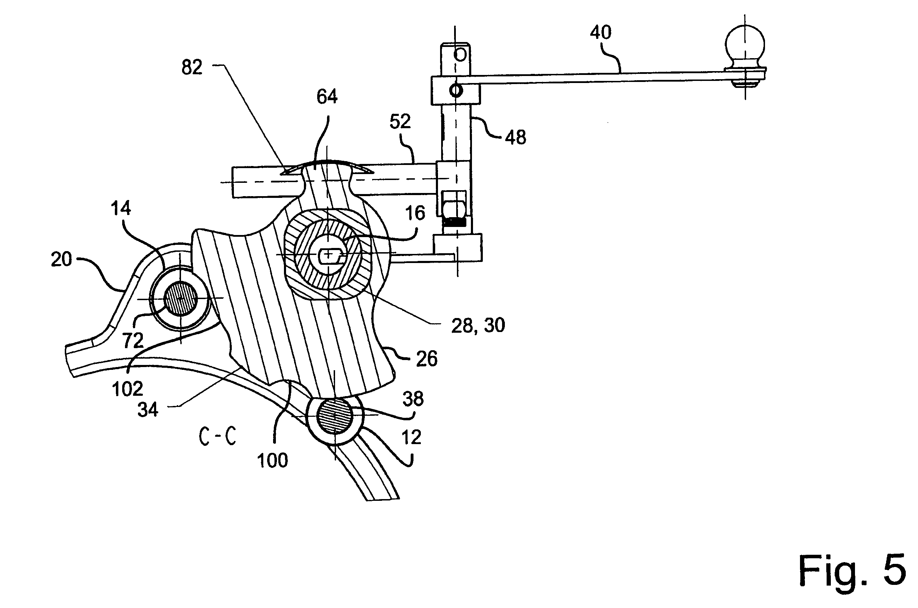

Das Zusammenwirken der Umfangsnuten 36, 38, 70, 72 der Schaltgabelstangen 12, 14 mit den Steuerkonturen des Blockierteils 26 und des Mitnehmerteils 24 sowie der Führungsnase 64 des Blockierteils 26 und des Einkerbungsabschnitts 80 des Mitnehmerteils 24 mit dem Gehäuse wird unter Bezug auf die Figuren 4 und 5 detailliert beschrieben.

Figur 4 zeigt eine Schnittansicht entlang der Linie B-B der Figur 2. Diese Schnittansicht veranschaulicht die Funktionalität des Mitnehmerteils sowie insbesondere seiner Mitnehmersteuerkontur 32 im Zusammenwirken mit den Umfangsnuten 36, 70 der Schaltgabelstangen 12, 14. Die Umfangsnuten 36 und 70 sind in der Schnittansicht als kleinere Radien der Schaltgabelstangen 12, 14 dargestellt. Die Mitnehmersteuerkontur 32 des Mitnehmerteils 24 weist in der Nähe der ersten Schaltgabelstange 12 einen ersten Freigabeabschnitt 90 und in der Nähe der zweiten Schaltgabelstange 14 einen zweiten Freigabeabschnitt 92 auf.

Im abgebildeten Zustand befindet sich das Mitnehmerteil 24 über seine Mitnehmersteuerkontur 32 in Eingriff mit der Umfangsnut 70 der Schaltgabelstange 14. Gleichzeitig gibt der sich in der Nähe der ersten Schaltgabelstange 12 befindliche erste Freigabeabschnitt 90 die erste Schaltgabelstange 12 frei. Dies hat zur Folge, dass bei einer axialen Bewegung des Mitnehmerteils 24, d. h. senkrecht zur Bildebene, die zweite Schaltgabelstange 14 und mit ihr die zweite Schaltgabel 20 dieser Bewegung entlang der Längsachse der Schaltgabelstange 14 folgen. Die erste Schaltgabelstange 12 und die mit ihr verbundene erste Schaltgabel 18 werden bei dieser Bewegung nicht bewegt. Führt nun das Mitnehmerteil 24, vermittelt durch den Drehhebel 40 und durch das Blockierteil 26, eine Rotationsbewegung gegen den Uhrzeigersinn um die durch die Lagerachse 16 definierte Achse aus, gibt der zweite Freigabeabschnitt 92 in einer bestimmten Drehposition die zweite Schaltgabelstange 14 frei und ermöglicht so eine Bewegung des Mitnehmerteils 24 entlang der Längsachse der Lagerachse 16, ohne die zweite Schaltgabelstange 14 mitzunehmen. Gleichzeitig gerät die Mitnehmersteuerkontur 32 in Eingriff mit der Umfangsnut 36 der ersten Schaltgabelstange 12 und ermöglicht so eine Mitnahme derselben entlang ihrer Längsachse, bei einer entsprechenden Bewegung des Mitnehmerteils 24.

Figur 5 zeigt eine Schnittansicht entlang der Linie C-C der Figur 2. Das Blockierteil 26 weist an seiner Blockierumfangskontur 34 einen in der Nähe der ersten Schaltgabelstange 12 angeordneten ersten Freigabeabschnitt 100 sowie einen in der Nähe der zweiten Schaltgabelstange 14 angeordneten zweiten Freigabeabschnitt 102 auf. Das Blockierteil 26 befindet sich mit seiner Steuerungsumfangskontur 34 in Eingriff mit der Umfangsnut 38 der ersten Schaltgabelstange 12. Gleichzeitig gibt der zweite Freigabeabschnitt 102 die zweite Schaltgabelstange 12 frei. In dieser Stellung, die der in Figur 4 abgebildeten entspricht, blockiert das Blockierteil 26 die erste Schaltgabelstange 12 und erlaubt eine axiale Verschiebbarkeit der zweiten Schaltgabelstange 14.

Bei einer Bewegung des Mitnehmerteils 24 relativ zu dem Blockierelement 26, die über die Polygonzylindergrenzflächen 28, 30 entlang der durch die Lagerachse 16 definierten Achse ermöglicht wird, wird eine unerwünschte Bewegung der ersten Schaltgabelstange 12 durch die Blockiersteuerkontur 34, die sich in Eingriff mit der Blockierumfangsnut 38 der ersten Schaltgabelstange 12 befindet, verhindert. Eine axiale Verschiebbarkeit des Blockierteils 26 selbst wird durch die Führungsnase 64, die sich in Eingriff mit einer im Gehäuse befindlichen Nut 82 befindet, verhindert. Bei einer Rotation des Mitnehmerteils 24 um die durch die Lagerachse 16 definierte Achse wird das Blockierteil 26 durch die Polygonzylinderoberflächen 28, 30 ebenfalls mitrotiert. Wird diese Rotation gegen den Uhrzeigersinn durchgeführt, gibt der erste Freigabeabschnitt 100 der Blockiersteuerkontur 34 die erste Schaltgabelstange 12 in einer bestimmten Winkelstellung frei. Gleichzeitig wird die Freigabe der zweiten Schaltgabelstange 14 durch den zweiten Freigabeabschnitt 102 aufgehoben und die Blockiersteuerkontur 34 gelangt in Eingriff mit der Blockierumfangsnut 72 der zweiten Schaltgabelstange 14. Auf diese Weise wird eine axiale Bewegung der ersten Schaltgabelstange 12 ermöglicht, während gleichzeitig eine derartige Bewegung der zweiten Schaltgabelstange 14 verhindert wird.

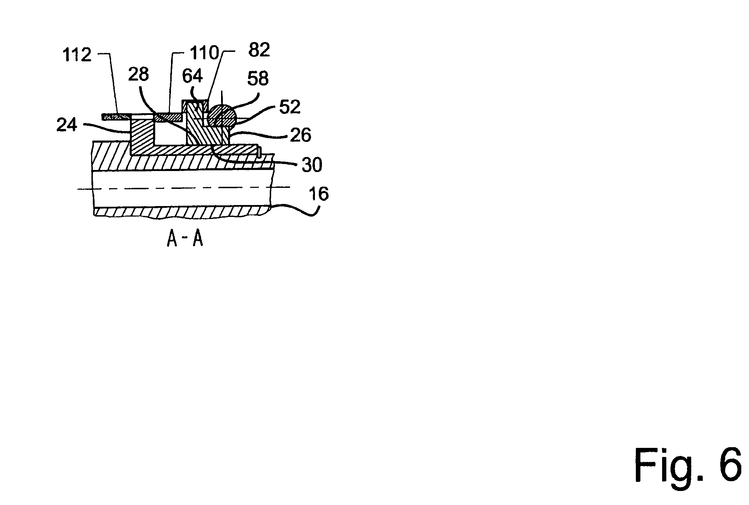

Figur 6 zeigt eine Schnittansicht entlang der Linie A-A der Figur 3. Auf der Lagerachse 16 befindet sich das Mitnehmerteil 24, welches sich mit einem polygonzylinderförmigen Führungsabschnitt 28 durch das Blockierteil 26 entlang der polygonzylinderförmigen inneren Oberfläche 30 erstreckt. Die Führungsnase 64 des Blockierteils 26 befindet sich in der im Gehäuse befindlichen Nut 82. Die Wählstange 52 steht mit ihrer Verzahnung 56 im Eingriff mit dem entsprechenden Verzahnungsabschnitt 58 des Blockierteils 26. Weiterhin weist das Getriebegehäuse einen tieferen Steg oder Stift 110 sowie einen flacheren Steg oder Stift 112 auf. Die Stege 110, 112 können ins Gehäuse bearbeitet sein oder als Stifte eingepresst werden.

Es ist im Betrieb der Schaltstangenbetätigungsvorrichtung 10 unter Umständen wünschenswert, die Schaltgabeln 18, 20 nur in entsprechenden Schaltpositionen zu schalten. Dazu dürfen bestimmte axiale Bewegungen des Mitnehmerteils 24 nur bei bestimmten Winkelpositionen ausführbar sein beziehungsweise bestimmte andere axiale Bewegungen sollen bei anderen bestimmten Winkelpositionen ermöglicht werden. Zu diesem Zweck sind im Gehäuse des Getriebes ein tieferer Steg 110 und ein flacherer Steg 112 angebracht. Die Steggeometrien entsprechen den Geometrien der Einkerbungen des Einkerbungsabschnitts 80 des Mitnehmerteils 24. Die Stege und die Einkerbungen bzw. Nuten sind so gegeneinander positioniert, dass sie nur bei einer entsprechenden Verdrehung des Mitnehmerteils 24 gekoppelt werden können. Bei bestimmten Schaltschemata ist es weiterhin auch erforderlich, die Schaltung in bestimmte Richtungen zu blockieren. Bei einer geeigneten Wahl der Steg- und Einkerbungsgeometrien verhindert beispielsweise der tiefere Steg 110 bei bestimmten Winkelpositionen des Mitnehmerteils 24 eine axiale Verschiebung des Mitnehmerteils 24 in Richtung des tieferen Stegs, wenn die Einkerbung des Einkerbungsabschnitts 80, die an dieser Winkelstellung um den tieferen Steg 110 greifen müsste, nicht die nötige Tiefe aufweist. Auf diese Weise lässt sich durch eine einfache konstruktive Maßnahme eine gezielte Einschränkung der Bewegungsfreiheit des Mitnehmerteils 24 erreichen.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 10: Schaltgabelbetätigungsvorrichtung
- 12: erste Schaltgabelstange
- 14: zweite Schaltgabelstange
- 16: Lagerachse
- 18: erste Schaltgabel
- 20: zweite Schaltgabel
- 22: Führungselement
- 24: Mitnehmerteil
- 26: Blockierteil
- 28: Führungsabschnitt
- 30: Führungsoberfläche
- 32: Mitnehmersteuerkontur
- 34: Blockiersteuerkontur
- 36: Mitnehmerumfangsnut
- 38: Blockierumfangsnut
- 40: Wählhebel
- 42: Schalthebel
- 44: Wählhebeldrehachse
- 46: Schalthebeldrehachse
- 48: Wählhebelstange
- 50: Betätigungshebel
- 52: Wählstange
- 54: Betätigungskopf
- 56: Verzahnung
- 58: Verzahnungsabschnitt
- 60: Schalthebelstange
- 62: Betätigungshebel
- 64: Führungsnase
- 70: Mitnehmerumfangsnut
- 72: Blockierumfangsnut
- 74: Lagerung
- 80: Einkerbungsabschnitt
- 82: Führungsnut
- 90: erster Freigabeabschnitt
- 92: zweiter Freigabeabschnitt
- 100: erster Freigabeabschnitt
- 102: zweiter Freigabeabschnitt
- 110: tieferer Steg
- 112: flacherer Steg
- A-A: Schnittebene entlang der Lagerachse 16
- B-B: Schnittebene durch das Mitnehmerteil 24 senkrecht zur Lagerachse 16
- C-C: Schnittebene durch das Blockierteil 26 senkrecht zur Lagerachse 16

## Patentansprüche

1. Schaltgabelbetätigungsvorrichtung zur wahlweisen Betätigung von zumindest zwei Schaltgabeln (18, 20) eines Getriebes, mit Blockiermitteln zum Blockieren einer nicht zu betätigenden Schaltgabel (18, 20) und mit Mitnehmermitteln zum Mitnehmen einer zu betätigenden Schaltgabel (18, 20) in einer axialen Richtung, wobei die Schaltgabelbetätigungsvorrichtung eine in der axialen Richtung angeordnete Lagerachse (16) aufweist, die zumindest ein Blockierteil (26) der Blockiermittel und zumindest ein Mitnehmerteil (24) der Mitnehmermittel lagert, **dadurch gekennzeichnet, dass** die Lagerachse (16) durch eine Kolbenstange (16) gebildet ist, insbesondere durch eine Kolbenstange (16) eines Servozylinders .

2. Schaltgabelbetätigungsvorrichtung nach Anspruch 1, **dadurch gekennzeichnet, dass** das Mitnehmerteil einen (24) einen Außenumfangsabschnitt mit einer ersten Steuerkontur (32) aufweist, die dazu vorgesehen ist, mit Umfangskonturen (36, 70) von zumindest zwei die zumindest zwei Schaltgabeln (18, 20) tragenden Schaltgabelstangen (12, 14) zusammenzuwirken.

3. Schaltgabelbetätigungsvorrichtung nach Anspruch 1 oder 2, **dadurch gekennzeichnet, dass** das Blockierteil (26) einen Außenumfangsabschnitt mit einer zweiten Steuerkontur (34) aufweist, die dazu vorgesehen ist, mit Umfangskonturen (38, 72) von zumindest zwei die zumindest zwei Schaltgabeln (18, 20) tragenden Schaltgabeistangen (12, 14) zusammenzuwirken.

4. Schaltgabelbetätigungsvorrichtung nach einem der vorhergehenden Ansprüche, **dadurch gekennzeichnet, dass** das Mitnehmerteil (24 ) in der axialen Richtung verschiebbar angeordnet ist.

5. Schaltgabelbetätigungsvorrichtung nach einem der vorhergehenden Ansprüche, **dadurch gekennzeichnet, dass** die Lagerachse ( 16) das Mitnehmerteil (24) derart lagert , dass es eine Drehbewegung um die axiale Richtung ausführen kann.

6. Schaltgabelbetätigungsvorrichtung nach Anspruch 2, **dadurch gekennzeichnet, dass** die erste Steuerkontur (36 , 70) die zu betätigende Schaltgabel (18 , 20) in der axialen Richtung mitnimmt und gleichzeitig nicht auf die nicht zu betätigende Schaltgabel (18, 20) einwirkt.

7. Schaltgabelbetätigungsvorrichtung nach einem der vorhergehenden Ansprüche, **dadurch gekennzeichnet, dass** das Blockierteil (26) hinsichtlich der axialen Richtung arretiert ist.

8. Schaltgabelbetätigungsvorrichtung nach einem der vorhergehenden Ansprüche, **dadurch gekennzeichnet, dass** die Lagerachse (16) das Blockierteil (26) derart lagert, dass es eine Drehbewegung um die axiale Richtung ausführen kann.

9. Schaltgabelbetätigungsvorrichtung nach Anspruch 3, **dadurch gekennzeichnet, dass** die zweite Steuerkontur (34) eine Bewegung der nicht zu betätigenden Schaltgabel (18 , 20) in der axialen Richtung blockiert und gleichzeitig eine Bewegung der zu betätigenden Schaltgabel (18 , 20) in der axialen Richtung freigibt.

10. Schaltgabelbetätigungsvorrichtung nach einem der vorhergehenden Ansprüche, **dadurch gekennzeichnet, dass** eine Drehbewegung des Blockierteils (26) um die axiale Richtung mit einer Drehbewegung des Mitnehmerteils (24 ) um die axiale Richtung gekoppelt ist.

11. Schaltgabelbetätigungsvorrichtung nach einem der vorhergehenden Ansprüche, **dadurch gekennzeichnet, dass** das Mitnehmerteil (24) und das Blockierteil (26) koaxial angeordnet sind.

12. Schaltgabelbetätigungsvorrichtung nach einem der vorhergehenden Ansprüche, **dadurch gekennzeichnet, dass** das Mitnehmerteil (24) mindestens eine Nut (82) aufweist .

13. Getriebe, insbesondere Kraftfahrzeuggetriebe, mit einer Schaltgabelbetätigungsvorrichtung (10) nach einem der Ansprüche 1 bis 12.

14. Getriebe nach Anspruch 13 , **dadurch gekennzeichnet, dass** es sich um ein manuelles oder teilautomatisches Schaltgetriebe handelt.

## Claims

1. A gearshift fork activation device for optionally activating at least two gearshift forks (18, 20) of a gearbox, having blocking means for blocking a gearshift fork (18, 20) which is not to be activated and having driver means for driving a gearshift fork (18, 20), to be activated, in an axial direction, wherein the gearshift fork activation device has a bearing axle (16) which is arranged in the axial direction and which supports at least one blocking part (26) of the blocking means and at least one driver part (24) of the driver means, **characterized in that** the bearing axle (16) is formed by a piston rod (16), in particular by a piston rod (16) of a servo cylinder.

2. A gearshift fork activation device as claimed in claim 1, **characterized in that** the driver part (24) has an external circumferential section with a first control contour (32) which is provided for interacting with circumferential contours (36, 70) of at least two gearshift fork rods (12, 14) which support the at least two gearshift forks (18, 20).

3. A gearshift fork activation device as claimed in claim 1 or 2, **characterized in that** the blocking part (26) has an external circumferential section with a second control contour (34) which is provided for interacting with circumferential contours (38, 72) of at least two gearshift fork rods (12, 14) which support the at least two gearshift forks (18, 20).

4. The gearshift fork activation device as claimed in one of the preceding claims, **characterized in that** the driver part (24) is arranged so as to be displaceable in the axial direction.

5. The gearshift fork activation device as claimed in one of the preceding claims, **characterized in that** the bearing axle (16) supports the driver part (24) in such a way that it can carry out a rotational movement about the axial direction.

6. The gearshift fork activation device as claimed in claim 2, **characterized in that** the first control contour (36, 70) drives the gearshift fork (18, 20) to be activated in the axial direction and at the same time does not act on the gearshift fork (18, 20) which is not to be activated.

7. The gearshift fork activation device as claimed in one of the preceding claims, **characterized in that** the blocking part (26) is secured in the axial direction.

8. The gearshift fork activation device as claimed in one of the preceding claims, **characterized in that** the bearing axle (16) supports the blocking part (26) in such a way that it can carry out a rotational movement about the axial direction.

9. The gearshift fork activation device as claimed in claim 3, **characterized in that** the second control contour (34) blocks a movement of the gearshift fork (18, 20), which is not to be activated, in the axial direction and at the same time releases a movement of the gearshift fork (18, 20), which is to be activated, in the axial direction.

10. The gearshift fork activation device as claimed in one of the preceding claims, **characterized in that** a rotational movement of the blocking part (26) about the axial direction is coupled to a rotational movement of the driver part (24) about the axial direction.

11. The gearshift fork activation device as claimed in one of the preceding claims, **characterized in that** the driver part (24) and the blocking part (26) are arranged coaxially.

12. The gearshift fork activation device as claimed in one of the preceding claims, **characterized in that** the driver part (24) has at least one groove (82).

13. A gearbox, in particular motor vehicle gearbox, having a gearshift fork activation device (10) as claimed in one of claims 1 to 12.

14. The gearbox as claimed in claim 13, **characterized in that** it is a manual or partially automatic change speed gearbox.

## Revendications

1. Dispositif à fourchette d'embrayage pour la commande facultative d'au moins deux fourchettes d'embrayage (18, 20) d'une boîte de vitesses, comprenant des moyens de blocage à bloquer une fourchette d'embrayage (18, 20) non prévue à être actionné et des moyens d'entraînement à entraîner une fourchette à actionner (18, 20) en un sens axial, au dispositif à fourchette d'embrayage comprenant un axe de palier (16) qui sert à appuyer au moins un élément bloqueur (26) desdits moyens de blocage et au moins un élément entraîneur (24) desdits moyens d'entraînement, **caractérisé en ce que** ledit axe de palier (16) est constitué par une tige de piston (16), en particulier par une tige de piston (16) d'un piston d'asservissement.

2. Dispositif à fourchette d'embrayage selon la revendication 1, **caractérisé en ce que** ledit élément entraîneur (24) comprend un segment périphérique extérieur à un premier profil de commande (32), qui est formé pour l'interaction avec des profils périphériques (36, 70) d'au moins deux tiges de fourchette d'embrayage (12, 14) portant lesdites au moins deux fourchettes d'embrayage (18, 20).

3. Dispositif à fourchette d'embrayage selon la revendication 1 ou 2, **caractérisé en ce que** ledit élément bloqueur (26) présente un segment périphérique extérieur à un deuxième profil de commande (34), qui est formé pour l'interaction avec des profils périphériques (38, 72) d'au moins deux tiges de fourchette d'embrayage (12, 14) portant lesdites au moins deux fourchettes d'embrayage (18, 20).

4. Dispositif à fourchette d'embrayage selon une quelconque des revendications précédentes, **caractérisé en ce que** ledit élément entraîneur (24) est disposé pour un déplacement en sens axial.

5. Dispositif à fourchette d'embrayage selon une quelconque des revendications précédentes, **caractérisé en ce que** ledit axe de palier (16) appuie ledit élément entraîneur (24) d'une telle façon, qu'il puisse réaliser un mouvement rotatif autour du sens axial.

6. Dispositif à fourchette d'embrayage selon la revendication 2, **caractérisé en ce que** ledit premier profil de commande (36, 70) entraîne ladite fourchette d'embrayage à actionner (18, 20) en sens axial, en n'agissant pas, en même temps, sur ladite fourchette d'embrayage non prévue à être actionné (18, 20).

7. Dispositif à fourchette d'embrayage selon une quelconque des revendications précédentes, **caractérisé en ce que** ledit élément bloqueur (26) est arrêté en vue du sens axial.

8. Dispositif à fourchette d'embrayage selon une quelconque des revendications précédentes, **caractérisé en ce que** ledit axe de palier (16) appuie ledit élément bloqueur (26) d'une telle manière, qu'il puisse réaliser un mouvement rotatif autour du sens axial.

9. Dispositif à fourchette d'embrayage selon la revendication 3, **caractérisé en ce que** ledit deuxième profil de commande (34) bloque un mouvement de ladite fourchette d'embrayage non prévue à être actionné (18, 20) en sens axial, en permettant, en même temps, un mouvement de ladite fourchette d'embrayage à actionner (18, 20) en sens axial.

10. Dispositif à fourchette d'embrayage selon une quelconque des revendications précédentes, **caractérisé en ce qu'**un mouvement rotatif dudit élément bloqueur (26) autour du sens axial est jumelé à un mouvement rotatif dudit élément entraîneur (24) autour du sens axial.

11. Dispositif à fourchette d'embrayage selon une quelconque des revendications précédentes, **caractérisé en ce que** ledit élément entraîneur (24) et ledit élément bloqueur (26) sont disposés en relation coaxiale.

12. Dispositif à fourchette d'embrayage selon une quelconque des revendications précédentes, **caractérisé en ce que** ledit élément entraîneur (24) comprend au moins une rainure (82).

13. Boîte de vitesses, en particulier boîte de vitesses d'automobile, comprenant un dispositif à fourchette d'embrayage (10) selon une quelconque des revendications 1 à 12.

14. Boîte de vitesses selon la revendication 13, **caractérisée en ce qu'**elle est une transmission à changement de vitesse à commande manuelle ou à commande automatique en partie.
